# EUROPÄISCHE PATENTSCHRIFT

(11) **EP 1 341 856 B1**
(45) Veröffentlichungstag und Bekanntmachung des Hinweises auf die Patenterteilung: **20.09.2006**
(21) Anmeldenummer: 01994780.3
(22) Anmeldetag: 12.12.2001
(51) Int. Cl.: C09C 1/42, C08K 9/08, C08K 3/34

(54) **POLYMERMODIFIZIERTE ANORGANISCHE PARTIKEL**
POLYMER MODIFIED INORGANIC PARTICLES
PARTICULES INORGANIQUES MODIFIEES PAR UN POLYMERE

(30) Priorität: 15.12.2000 AT 20862000
(43) Veröffentlichungstag der Anmeldung: 10.09.2003
(73) Patentinhaber: AMI Agrolinz Melamine International GmbH, 4020 Linz (AT)
(72) Erfinder: RÄTZSCH, Manfred, A-4062 Wilhering/Thalheim (AT); DICKE, René, A-4030 Linz (AT); MACHHERNDL, Markus, A-4060 Leonding (AT); GRANNER, Gerd, A-4061 Paching (AT)
(74) Vertreter: Gross, Felix
(86) Internationale Anmeldenummer: PCT/EP2001/014581
(87) Internationale Veröffentlichungsnummer: WO 2002/048270

(56) Entgegenhaltungen:
- CA-A- 2 000 472
- US-A- 5 866 645
- DATABASE CA [Online] CHEMICAL ABSTRACTS SERVICE, COLUMBUS, OHIO, US; NAKAWA, TAKAHIRO ET AL: "Intercalation compound particles and polymer compositions containing them" retrieved from STN Database accession no. 119:97050 XP002195326 -& JP 04 335045 A (TORAY INDUSTRIES, INC., JAPAN) 24. November 1992 (1992-11-24)
- PATENT ABSTRACTS OF JAPAN vol. 008, no. 062 (C-215), 23. März 1984 (1984-03-23) -& JP 58 217424 A (TAKAKO SHIMAZU), 17. Dezember 1983 (1983-12-17)

## Beschreibung

Die Erfindung betrifft polymermodifizierte anorganische Partikel mit Schichtstruktur, ein Verfahren zu deren Herstellung und deren Verwendung.

Anorganische Partikel mit Schichtstruktur wie Tonmineralien sowie deren Modifizierung mit Farbstoffen, mehrwertigen Alkoholen und Alkylammoniumionen sind bekannt [Lagaly, G., Clay minerals (1981)16, 1-21].

Bekannt ist weiterhin, anorganische Partikel mit Schichtstruktur als Kunststoffadditive in Elastomeren (EP 0 484 245) und Thermoplasten [Mülhaupt, R., Kunststoffe 87(1997)4, 482-486] einzusetzen. Von Nachteil ist die hohe Agglomeration der schichtförmigen Tonmineralien, so dass es nicht gelingt, schichtförmige Tonmineralien feinteilig in Thermoplastschmelzen zu verteilen.

Bekannte Lösungen für die Dispergierung von schichtförmigen Tonmineralien mit Partikelgrössen von 1 bis 500 nm in Kunststoffschmelzen sind der Zusatz von Aminsubstituierten Oniumkomplexen (WO 93 04 117) oder die Dispergierung von Phyllosilikaten durch Entwässerung und Komplexierung mit Lösungen wasserunlöslicher Polymerer (EP 0 822 163). Diese Verfahren sind jedoch sehr aufwendig, niedermolekulare Verbindungen in den Blends bewirken einen Abfall der Festigkeit der Blends.

Ebenfalls ist bekannt, die Eigenschaften von Aminoplast-Formstoffen durch Zusatz von Füllstoffen wie anorganische Füllstoffe, Holzmehl, Russ, Asbest oder Glasfasern zu modifizieren (Woebcken, Kunststoff-Handbuch Bd. 10 "Duroplaste", S. 267, Carl-Hanser-Verlag München 1988). Von Nachteil bei den bekannten Lösungen ist die Versprödung der Aminoplastblends auf Grund der begrenzten Füllstoffverträglichkeit.

Bekannt ist weiterhin, Blends aus Thermoplasten oder Duroplasten und Schichtsilikaten durch mechanische Mischung der Komponenten (US 5 955 535) oder durch sorptive Behandlung von Schichtsilikaten mit Mischungen aus Duroplastprepolymeren und Härtern (US 5 866 654) herzustellen. Auf Grund der hohen Molmasse der Polymeren bzw. Prepolymeren ist die Beladung der Schichtsilikate und die Homogenität der Beladung jedoch begrenzt.

Aufgabe der vorliegenden Erfindung sind anorganische Partikel mit Schichtstruktur, die zur Herstellung von Aminoplast-Halbzeugen und -Formstoffen mit verbessertem Eigenschaftsspektrum geeignet sind sowie eine gute Dispergierbarkeit in Kunststoffen besitzen und eine Verbesserung des Eigenschaftsspektrums von Kunststoffen bewirken.

Die erfindungsgemäße Aufgabe wurde durch polymermodifizierte anorganische Partikel mit Schichtstruktur gemäß Anspruch 1 gelöst, wobei die polymermodifizierten anorganischen Partikel einen mittleren Partikeldurchmesser von 5 nm bis 20000 nm und interlamellar 20 bis 5000 Masse%, bezogen auf das wasserfreie anorganische Partikel, eines Gemischs aus 50 bis 98 Masse% von im wesentlichen Aminoplasten und 2 bis 50 Masse% Wasser enthalten, wobei die polymermodifizierten anorganischen Partikel durch Quellung der anorganischen Partikel mit C₁-C₁₀-Aldehyden als Lösungen in Wasser bzw. Mischungen aus Wasser und C₁-C₈-Alkoholen, die gegebenenfalls saure Katalysatoren enthalten, und nachfolgende Umsetzung der Aldehyd-gequollenen anorganischen Partikel mit Lösungen oder Suspensionen von mehrfunktionellen C₁-C₃₀ Aminoverbindungen vom Typ Melamin, Melaminderivate, Harnstoff, Harnstoffderivate, Guanidin, Guanidinderivate, Cyanamid, Dicyandiamid, Sulfonamide und/oder Anilin sowie deren Salze in Wasser bzw. Mischungen aus Wasser und C₁-C₈-Alkoholen hergestellt worden sind.

Bevorzugt sind die anorganischen Partikel mit Schichtstruktur Silikate, Phosphate, Arsenate, Titanate, Vanadate, Niobate, Molybdate und/oder Manganate, insbesondere Schichtsilikate vom Typ Montmorillonit, Bentonit, Kaolinit, Muskovit, Hectorit, Fluorhectorit, Kanemit, Revdit, Grumantit, Ilerit, Saponit, Beidelit, Nontronit, Stevensit, Laponit, Taneolit, Vermiculit, Volkonskoit, Magadit, Rectorit, Halloysit, Kenyait, Sauconit, Borfluorphlogopite und/oder synthetische Schichtsilikate, wobei die Schichtsilikate weiterhin besonders bevorzugt Schichtsilikate mit austauschbaren Kationen vom Typ Alkali-, Erdalkali-, Aluminium-, Eisen- und/oder Mangan-Kationen sind.

Beispiele für geeignete Phosphate mit Schichtstruktur sind Verbindungen der Formel H₂[M^{IV}(PO₄)₂]. ₓH₂O (M^{IV}=Zr, Ti, Ge, SN, Pb) und CaPO₄RH₂O (R=CH₃; C₂H₅). Beispiele für geeignete Arsenate mit Schichtstruktur sind Verbindungen der Formel H₂[M^{IV}(AsO₄)₂]. ₓH₂O und H[Mn(AsO₄)₂]. ₓH₂O. Beispiele für geeignete Titanate mit Schichtstruktur sind Verbindungen der Formel Na₄Ti₉O₂₀. ₓH₂O und K₂Ln₂Ti₃O₁₀ₓH₂O.

Synthetische Schichtsilikate werden beispielsweise durch Umsetzung von natürlichen Schichtsilikaten mit Natriumhexafluorosilikat erzielt.

Der bevorzugte Partikeldurchmesser der polymermodifizierten anorganischen Partikel mit Schichtstruktur beträgt 100 bis 1000 nm.

Die in den polymermodifizierten anorganischen Partikeln enthaltenen Aminoplaste sind bevorzugt Melaminharze, Harnstoffharze, Cyanamidharze, Dicyandiamidharze, Guanaminharze, Sulfonamidharze und/oder Anilinharze.

Bevorzugt enthalten die polymermodifizierten anorganischen Partikel interlamellar 50 bis 150 Masse%, bezogen auf das wasserfreie anorganische Partikel, an Aminoplasten.

Bevorzugt werden als Melaminharze Polykondensate aus Melamin bzw. Melaminderivaten und C₁C₁₀-Aldehyden mit einem Molverhältnis Melamin bzw. Melaminderivat / C₁-C₁₀₋Aldehyden 1 : 1 bis 1: 6 sowie deren partielle Veretherungsprodukte mit C₁-C₁₀-Alkoholen, wobei die Melaminderivate bevorzugt durch Hydroxy-C₁-C₁₀-alkyl-gruppen , Hydroxy-C₁₋C₄-alkyl(oxa-C₂-C₄-alkyl)₁₋₅-gruppen und/oder durch Amino-C₁-C₁₂-alkylgruppen substituierte Melamine, Diaminomethyltriazine und/oder Diaminophenyltriazine, besonders bevorzugt 2-(2-Hydroxyethylamino)-4,6-diamino-1,3,5-triazin, 2-(5-Hydroxy-3-oxapentylamino)-4,6-di-amino-1,3,5-triazin und/oder 2,4,6-Tris-(6-aminohexylamino)-1,3,5-triazin, Ammelin, Ammelid, Melem, Melon, Melam, Benzoguanamin, Acetoguanamin, Tetramethoxymethylbenzoguanamin, Caprinoguanamin und/oder Butyroguanamin sind, und die C₁-C₁₀₋Aldehyde bevorzugt Formaldehyd, Acetaldehyd, Trimethylolacetaldehyd, Acrolein, Furfurol, Glyoxal und/oder Glutaraldehyd, besonders bevorzugt Formaldehyd, sind.

Die Melaminharze in den erfindungsgemässen polymermodifizierten anorganischen Partikeln mit Schichtstruktur können ebenfalls 0,1 bis 10 Masse%, bezogen auf die Summe von Melamin und Melaminderivaten, eingebaute Phenole und/oder Harnstoff enthalten. Als Phenolkomponenten sind dabei Phenol, C₁-C₉-Alkylphenole, Hydroxyphenole und/oder Bisphenole geeignet.

Beispiele für partielle Veretherungsprodukte von Melaminharzen mit C₁-C₁₀-Alkoholen sind methylierte oder butylierte Melaminharze.

Beispiele für die in den erfindungsgemässen polymermodifizierten anorganischen Partikeln mit Schichtstruktur als Aminoplaste gegebenenfalls enthaltenen Hamstoffharze sind neben Harnstoff-Formaldehyd-Harzen ebenfalls Mischkondensate mit Phenolen, Säureamiden oder Sulfonsäureamiden.

Beispiele für die in den erfindungsgemässen polymermodifizierten anorganischen Partikeln mit Schichtstruktur als Aminoplaste gegebenenfalls enthaltenen Sulfonamidharze sind Sulfonamidharze aus p-Toluolsulfonamid und Formaldehyd.

Beispiele für die in den erfindungsgemässen polymermodifizierten anorganischen Partikeln mit Schichtstruktur als Aminoplaste gegebenenfalls enthaltenen Guanaminharze sind Harze, die als Guanaminkomponente Benzoguanamin, Acetoguanamin, Tetramethoxymethylbenzoguanamin, Caprinoguanamin und/oder Butyroguanamin enthalten.

Beispiele für die in den erfindungsgemässen polymermodifizierten anorganischen Partikeln mit Schichtstruktur als Aminoplaste gegebenenfalls enthaltenen Anilinharze sind Anilinharze, die als aromatische Diamine neben Anilin ebenfalls Toluidin und/oder Xylidine enthalten können.

Der Gehalt der polymermodifizierten anorganischen Partikel "von im wesentlichen" Aminoplasten und Wasser bedeutet, dass bei der Kondensation von C₁-C₁₀-Aldehyden und mehrfunktionellen C₁-C₃₀ Aminoverbindungen im anorganischen Partikel sehr geringe Anteile an C₁-C₁₀-Aldehyden und mehrfunktionellen C₁-C₃₀ Aminoverbindungen unumgesetzt bleiben können und als weitere Komponenten im polymermodifizierten anorganischen Partikel enthalten sein können.

Die polymermodifizierten anorganischen Partikel mit Schichtstruktur werden erfindungsgemäß nach einem Verfahren hergestellt, bei dem polymermodifizierte anorganische Partikel mit einem mittleren Partikeldurchmesser von 5 nm bis 20000 nm und einem interlamellaren Gehalt von 20 bis 5000 Masse%, bezogen auf das wasserfreie anorganische Partikel, eines Gemischs aus 50 bis 98 Masse% von im wesentlichen Aminoplasten und 2 bis 50 Masse% Wasser nach einem Mehrstufenprozess hergestellt werden, bei dem in der 1. Verfahrensstufe anorganische Partikel mit Schichtstruktur in einem Rührreaktor bei 20 bis 100°C und einer Verweilzeit von 10 bis 180 min durch Quellung mit 15 bis 4000 Masse%, bezogen auf die wasserfreien anorganischen Partikel , C₁-C₁₀-Aldehyden als 5 bis 60% Lösungen in Wasser bzw. Mischungen aus 5 bis 99 Gew.% Wasser und 95 bis 1 Masse% C₁-C₈-Alkoholen, die gegebenenfalls 0,05 bis 1,0 Masse%, bezogen auf die C₁₋C₁₀-Aldehyde, saure Katalysatoren enthalten, bei pH > 8,5 beladen werden, und in einer 2.Verfahrensstufe die mit C₁-C₁₀-Aldehyden gequollenen anorganischen Partikel mit Lösungen oder Suspensionen von mehrfunktionellen C₁-C₃₀ Aminoverbindungen vom Typ Melamin, Melaminderivate, Harnstoff, Harnstoffderivate, Guanidin, Guanidinderivate, Cyanamid, Dicyandiamid, Sulfonamide und/oder Anilin sowie deren Salze in Wasser bzw. Mischungen aus 5 bis 99 Gew.% Wasser und 95 bis 1 Masse% C₁-C₈-Alkoholen mit einem Feststoffgehalt von 5 bis 90 Masse% homogenisiert und bei Verweilzeiten von 20 bis 150 min bei 50 bis 95°C umgesetzt werden, wobei das Molverhältnis der zugesetzten mehrfunktionellen C₁-C₃₀ Aminoverbindungen / C₁-C₁₀-Aldehyden 1 : 2 bis 1 : 6 beträgt, und nachfolgend die polymermodifizierten anorganischen Partikel unter Abtrennung der flüssigen Phase bei 20 bis 180°C und einer Verweilzeit von 0,1 bis 8 Std. getrocknet werden.

Bei dem Verfahren zur Herstellung polymermodifizierter anorganischer Partikel werden in der ersten Verfahrensstufe als C₁-C₁₀-Aldehyde bevorzugt Formaldehyd, Acetaldehyd, Trimethylolacetaldehyd, Acrolein, Benzaldehyd, Furfurol, Glyoxal, Glutaraldehyd, Phthalaldehyd und/oder Terephthalaldehyd, besonders bevorzugt Formaldehyd, eingesetzt.

Bei dem Verfahren zur Herstellung polymermodifizierter anorganischer Partikel können in der ersten Verfahrensstufe als saure Katalysatoren anorganische Säuren wie Salzsäure oder Schwefelsäure und/oder organische Säuren wie Ameisensäure, Essigsäure, Oxalsäure, p-Toluolsulfonsäure oder Milchsäure eingesetzt werden. Bevorzugt werden Säuren mit Pufferfunktion wie Citronensäure, Essigsäure und/oder Phosphorsäure oder saure Salze mit Pufferfunktion wie Natriumhydrogenphosphat oder Kaliumhydrogenphosphat.

Die in der zweiten Verfahrensstufe bei der Herstellung polymermodifizierter anorganischer Partikel eingesetzten Melaminderivate sind bevorzugt durch Hydroxy-C₁-C₁₀-alkylgruppen, Hydroxy-C₁-C₄-alkyl-(oxa-C₂-C₄-alkyl)₁₋₅-gruppen und/oder durch Amino-C₁-C₁₂₋alkylgruppen substituierte Melamine, Diaminomethyltriazine und/oder Diaminophenyltriazine, besonders bevorzugt 2-(2-Hydroxyethyl-amino)-4,6-diamino-1,3,5-triazin, 2-(5-Hydroxy-3-oxapentylami-no)-4,6-diamino-1,3,5-triazin, 2,4,6-Tris-(6-aminohexylamino)-1,3,5-triazin und/oder 2,4-(Di-5-hydroxy-3-oxa-pentylamin)-6-methyl-1,3,5-triazin, Ammelin, Ammelid, Melem, Melon und/ oder Melam.

Die in der zweiten Verfahrensstufe bei der Herstellung polymermodifizierter anorganischer Partikel eingesetzten Hamstoffderivate sind bevorzugt Thioharnstoff sowie durch C₁-C₁₀₋alkylgruppen, C₆-C₁₄-arylgruppen, Hydroxy-C₁-C₁₀-alkylgruppen , Hydroxy-C₁-C₄-alkyl-(oxa-C₂-C₄-alkyl)₁₋₅-gruppen und/oder durch Amino-C₁-C₁₂-alkylgruppen substituierter Harnstoff bzw. Thioharnstoff.

Die in der zweiten Verfahrensstufe bei der Herstellung polymermodifizierter anorganischer Partikel eingesetzten Salze von Melamin, Melaminderivaten, Harnstoff, Hamstoffderivaten, Guanidin, Guanidinderivaten, Cyanamid, Dicyandiamid, Sulfonamiden und/oder Anilin sind bevorzugt Salze mit anorganischen und/oder organischen Anionen, bevorzugt Fluoride, Chloride, Bromide, Jodide, Sulfate, Phosphate, Borate, Silikate, Cyanurate, Tosylate, Formiate, Acetate, Propionate, Butyrate und/oder Maleinate.

Die polymermodifizierten anorganischen Partikel sind bevorzugt zur Flammfestmachung von Kunststoffen, insbesondere in Kombination mit anorganischen und/oder organischen Salzen mit Ammonium-, Alkylammonium-, Arylammonium, Phosphonium-, Alkylphosphonium-, Arylphosphonium- Alkali- und/oder Erdalkali-Kationen und/oder Phosphat-, Phosphit-, Phosphonat-, Silikat- und/oder Borat-Anionen und/oder mit mehrwertigen Alkoholen vom Typ Erythrit, Pentaerythrit, Pentit und/oder Hexit, sowie als Additiv zur Erhöhung der Kratzfestigkeit, UV-Beständigkeit und Verbesserung der Barriereeigenschaften von Kunststoffen und Kunststofflaminaten, sowie als Formmassen und als Katalysator bzw. Katalysatorträger geeignet.

In der Anwendung der polymermodifizierten anorganischen Partikel als Additiv zur Flammfestmachung von Kunststoffen werden insbesondere Kombinationen bevorzugt, die Ammoniumpolyphosphat und Pentaerythrit enthalten.

In der Anwendung der polymermodifizierten anorganischen Partikel als Kunststoffblends ist es von Vorteil, den polymermodifizierten anorganischen Partikel 0,1 bis 5 Masse%, bezogen auf die polymermodifizierten anorganischen Partikel, wasserlösliche, in Wasser dispergierbare und/oder in Wasser emulgierbare Polymere, bevorzugt Polyvinylalkohol, Polyvinylacetat, Maleinsäureanhydrid-Copolymere und/oder gesättigte bzw. ungesättigte Polyester, zuzusetzen.

Erfindungsgemäss sind weiterhin Polyolefine mit einem Gehalt von 1 bis 60 Masse%, bezogen auf die eingesetzten Polyolefine, polymermodifizierten anorganischen Partikeln mit Schichtstruktur sowie gegebenenfalls als weitere Zusatzstoffe anorganischen bzw. organischen Salzen, Füllstoffen, Verstärkerstoffen, polymeren Dispergatoren, Hilfsstoffen und/oder mehrwertige Alkoholen,
wobei die anorganischen bzw. organischen Salze Salze mit Ammonium-, Alkylammonium-, Phosphonium-, Alkylphosphonium-, Arylphosphonium-, Alkali- und/oder Erdalkali-Kationen und/oder Salze mit Phosphit-, Phosphat-, Phosphonat-, Silikat- und/oder Borat-Anionen sind, die bis zu 25 Masse% im Polyolefin enthalten sein können,
wobei die Füllstoffe und/oder Verstärkerstoffe anorganische bzw. organische Füllstoffe und/oder Fasern sind, die bis zu 40 Masse% im Polyolefin enthalten sein können,
wobei die polymeren Dispergatoren wasserlösliche, in Wasser dispergierbare und/oder in Wasser emulgierbare Polymere sind, die bis zu 3 Masse% im Polyolefin enthalten sein können,
und wobei die mehrwertigen Alkohole mehrwertige Alkohole vom Typ Erythrit, Pentaerythrit, Pentit und/oder Hexit sind, die bis zu 15 Masse% im Polyolefin enthalten sein können.

Bevorzugt beträgt der Anteil der polymermodifizierten anorganischen Partikel mit Schichtstruktur 3 bis 30 Masse%, bezogen auf die Polyolefine.

Die erfindungsgemässen Polyolefine enthaltend polymermodifizierte anorganische Partikel mit Schichtstruktur sowie gegebenenfalls weitere Zusatzstoffe besitzen ein verbessertes Eigenschaftsspektrum in. Bezug auf Flammfestigkeit, Zähigkeit, Kratz-festigkeit, UV-Beständigkeit und Barriereeigenschaften.

Bevorzugt sind die erfindungsgemässen Polyolefine enthaltend polymermodifizierte anorganische Partikel mit Schichtstruktur sowie gegebenenfalls weitere Zusatzstoffe Poly-C₂₋C₅-α-Olefine bzw. Copolymere aus C₂-C₅-α-Olefinen und α-Olefinen mit 2 bis 18 C-Atomen vom Typ lineare und/oder verzweigte Polyethylen - Homo- und/ oder - Copolymere, Cycloolefin-Ethylen-Copolymere, Polypropylen-Homopolymere, statistische Propylen-Copolymere, Propylen - Blockcopolymere, statistische Propylen-Blockcopolymere, isotaktisches Polybuten-1 und/oder 4-Methylpenten-1- Homo- und/oder -Copolymere.

Als Füllstoffe können in den erfindungsgemässen Polyolefinen enthaltend polymermodifizierte anorganische Partikel mit Schichtstruktur sowie gegebenenfalls weitere Zusatzstoffe Al₂O₃, Al(OH)₃, Bariumsulfat, Calciumcarbonat, Glaskugeln, Kieselerde; Glimmer, Quarzmehl, Schiefermehl, Mikrohohlkugeln, Ruß, Talkum, Gesteinsmehl, Holzmehl, und/oder Cellulosepulver enthalten sein.

Beispiele für Verstärkerstoffe in den erfindungsgemässen Polyolefinen enthaltend polymermodifizierte anorganische Partikel mit Schichtstruktur sowie gegebenenfalls weitere Zusatzstoffe sind Holzfasern, Cellulosefasern, Flachs, Jute und Kenaf.

Bevorzugte Verstärkerstoffe, die in den erfindungsgemässen Polyolefinen mit einem Gehalt an polymermodifizierten anorganischen Partikeln mit Schichtstruktur sowie gegebenenfalls weiteren Zusatzstoffen enthalten sein können, sind anorganische Fasern, insbesondere Glasfasern und/oder Kohlenstofffasern, Naturfasern, insbesondere Cellulosefasern, und/oder Kunststofffasern, insbesondere Fasern aus Polyacrylnitril, Polyvinylalkohol, Polyvinylacetat, Polypropylen, Polyestern und/oder Polyamiden.

In den erfindungsgemässen Polyolefinen enthaltend polymermodifizierte anorganische Partikel mit Schichtstruktur sowie gegebenenfalls weitere Zusatzstoffe können als polymere Dispergatoren wasserlösliche, in Wasser dispergierbare und/oder in Wasser emulgierbare Polymere enthalten sein.

Beispiele für wasserlösliche Polymere, die in den erfindungsgemässen Polyolefinen mit einem Gehalt an polymermodifizierten anorganischen Partikeln mit Schichtstruktur sowie gegebenenfalls weiteren Zusatzstoffen enthalten sein können, sind Polyvinylalkohol, Polyacrylamid, Polyvinylpyrrolidon, Polyethylenoxid, Methylcellulose, Ethylcellulose, Hydroxyethylcellulose und/oder Carboxymethylcellulose.

Die in den erfindungsgemässen Polyolefinen enthaltend polymermodifizierte anorganische Partikel mit Schichtstruktur sowie gegebenenfalls weitere Zusatzstoffe gegebenenfalls enthaltenen Wasser dispergierbaren bzw. in Wasser emulgierbaren Polymere sind Thermoplaste, Elastomere und/oder Wachse.

Beispiele für geeignete Thermoplaste sind Celluloseester, Celluloseether, Polyvinylacetat, Polyvinylpropionat, Polyacrylate, ungesättigte bzw. gesättigte Polyester, Maleinsäureanhydrid-Copolymere, Polypropylenoxid und/oder Ethylen-VinylacetatCopolymere. Als Maleinsäureanhydrid-Copolymere werden Copolymere bevorzugt, bei denen die Anhydridgruppen durch Amidierung und/oder Imidierung mit hydro-phoben Kohlenwasserstoffsubstituenten oder durch Veresterung mit hydrophilen Polyalkylenoxidsubstituenten modifiziert sind.

Beispiele für in Wasser dispergierbare bzw. in Wasser emulgierbare Elaste sind Styren-Butadien-Kautschuke, Acrylatkautschuke, Polyurethane und/oder Fluorelasto-mere.

Beispiele für geeignete Wachse sind Polyolefinoxidatwachse wie Polyethylenwachsoxidate oder Wachse auf Basis von Ethylen-Vinylacetat-Copolymeren.

Besonders bevorzugte polymere Dispergatoren, die in den erfindungsgemässen Polyolefinen mit einem Gehalt an polymermodifizierten anorganischen Partikeln mit Schichtstruktur sowie gegebenenfalls weiteren Zusatzstoffen gegebenenfalls enthalten sind, sind Polyvinylalkohol, Polyvinylacetat, Maleinsäureanhydrid-Copolymere und/oder ungesättigte bzw. gesättigte Polyester.

Die erfindungsgemässen Polyolefine enthaltend polymermodifizierte anorganische Partikel mit Schichtstruktur sowie gegebenenfalls weitere Zusatzstoffe können nach einem Verfahren hergestellt werden, bei dem Mischungen aus Polyolefinen, polymermodifizierten anorganischen Partikeln und gegebenenfalls als weitere Zusatzstoffe anorganischen bzw. organischen Salzen, Füllstoffen, Verstärkerstoffen, polymeren Dispergatoren in Form von Lösungen, Dispersionen oder Emulsionen, Hilfsstoffen und/oder mehrwertigen Alkoholen in kontinuierlichen Knetem aufgeschmolzen oder bei dem Polyolefine in kontinuierlichen Knetem aufgeschmolzen werden und die Dosierung der polymermodifizierten anorganischen Partikel und gegebenenfalls anorganischen bzw. organischen Salzen, Füllstoffen, Verstärkerstoffen, polymeren Dispergatoren in Form von Lösungen, Dispersionen oder Emulsionen und/oder mehrwertigen Alkoholen in die Polymerschmelze erfolgt, die Mischungen bei Massetemperaturen 30 bis 100 grd oberhalb der Schmelz- bzw. Erweichungstemperatur der Polyolefine homogenisiert, gegebenenfalls vacuumentgast, ausgetragen und granuliert werden, oder direkt aus der Schmelze zu Halbzeugen oder Formstoffen ausgeformt werden, wobei der Gehalt der Polyolefine an polymermodifizierten anorganischen Partikeln mit Schichtstruktur sowie gegebenenfalls als weitere Zusatzstoffe anorganischen bzw. organischen Salzen, Füllstoffen, Verstärkerstoffen, polymeren Dispergatoren, Hilfsstoffen und/oder mehrwertigen Alkoholen 1 bis 60 Masse%, bezogen auf die eingesetzten Polyolefine, beträgt.

Als kontinuierliche Kneter werden bei der Herstellung der erfindungsgemässen Polyolefine enthaltend polymermodifizierte anorganische Partikel mit Schichtstruktur sowie gegebenenfalls weitere Zusatzstoffe bevorzugt Doppelschneckenextruder mit UD 30 bis 48 oder Einschneckenextruder mit Plungerschnecke eingesetzt.

Bei der Herstellung können weiters als Hilfsstoffe 0,01 bis 2,5 Masse% Stabilisatoren, 0,1 bis 1 Masse% Antistatika und/oder 0,01 bis 5 Masse% Verarbeitungshilfsmittel, jeweils bezogen auf die eingesetzten Polyolefine, zugesetzt werden.

Geeignete Stabilisatoren sind bevorzugt Mischungen aus 0,01 bis 0,6 Masse% phenolischen Antioxidantien, 0,01 bis 0,6 Masse% 3-Arylbenzofuranonen, 0,01 bis 0,6 Masse% Verarbeitungsstabilisatoren auf Basis von Phosphiten , 0,01 bis 0,6 Masse% Hochtemperaturstabilisatoren auf Basis von Disulfiden und Thioäthem und/oder 0,01 bis 0,8 Masse% sterisch gehinderten Aminen (HALS).

Als Verarbeitungshilfsmittel können bei der Herstellung der erfindungsgemässen Polyolefine enthaltend polymermodifizierte anorganische Partikel mit Schichtstruktur sowie gegebenenfalls weitere Zusatzstoffe Calciumstearat, Magnesiumstearat und/oder Wachse zugesetzt werden.

Bevorzugt enthalten die bei der Herstellung der erfindungsgemässen Polyolefine enthaltend polymermodifizierte anorganische Partikel mit Schichtstruktur sowie gegebenenfalls weitere Zusatzstoffe eingesetzten Polyolefine bzw. Olefincopolymere 0,05 bis 2 Masse%, bezogen auf die eingesetzten Polyolefine, Säure-, Säureanhydrid- und/oder EpoxidGruppen enthaltende Olefincopolymere und/oder Olefinpfropfcopolymere, bevorzugt Ethylen-Butylacrylat-Acrylsäure-Terpolymere mit einem Acryl-säuregehalt von 0,1 bis 2 Masse% oder Maleinsäureanhydrid-gepfropftes Polypropylen mit einem Maleinsäureanhydridgehalt von 0,05 bis 0,5 Masse%, als Kompatibilisator für die polymermodifizierten anorganischen Partikel mit Schichtstruktur und die anorganischen bzw. organischen Salze und/oder mehrwertigen Alkohole. Die Olefinpfopfcopolymere können nach üblichen Verfahren durch Umsetzung des Polyolefins mit dem ungesättigten Monomer in Gegenwart thermisch zerfallender Radikalbildner in fester Phase oder in der Schmelze hergestellt werden.

Die erfindungsgemässen Polyolefine enthaltend polymermodifizierte anorganische Partikel mit Schichtstruktur sowie gegebenenfalls weitere Zusatzstoffe weisen ein verbessertes Eigenschaftsspektrum, insbesonders eine gute Flammfestigkeit auf. Sie werden insbesondere als Folien, Fasern, Platten, Rohre, Beschichtungen, Hohlkörper, Spritzgusserzeugnisse und Schaumstoffe angewendet. Der besondere Vorteil dieser Halbzeuge und Formstoffe besteht in der verbesserten Flammfestigkeit, Zähigkeit, Kratzfestigkeit, UV-Beständigkeit und den verbesserten Barriereeigenschaften.

Erfindungsgemäss sind weiterhin duroplastische Kunststoffe mit einem Gehalt von 2 bis 80 Masse%, bezogen auf die eingesetzten duroplastischen Kunststoffe, polymermodifizierten anorganischen Partikeln mit Schichtstruktur sowie gegebenenfalls als weitere Zusatzstoffe anorganischen bzw. organischen Salzen, Füllstoffen, Verstärkerstoffen, polymere Dispergatoren, Hilfsstoffen und/oder mehrwertige Alkoholen,
wobei die anorganischen bzw. organischen Salze Salze mit Ammonium-, Alkylammonium-, Phosphonium-, Alkylphosphonium-, Arylphosphonium-, Alkali- und/oder Erdalkali-Kationen und/oder Salze mit Phosphit-, Phosphat-, Phosphonat-, Silikat- und/oder Borat-Anionen sind, die bis zu 60 Masse% in den duroplastischen Kunststoffen enthalten sein können,
wobei die Füllstoffe und/oder Verstärkerstoffe anorganische bzw. organische Füllstoffe und/oder Fasern sind, die bis zu 70 Masse% in den duroplastischen Kunststoffen enthalten sein können,
wobei die polymeren Dispergatoren wasserlösliche, in Wasser dispergierbare und/oder in Wasser emulgierbare Polymere sind, die bis zu 5 Masse% in den duroplastischen Kunststoffen enthalten sein können,
und wobei die mehrwertigen Alkohole mehrwertige Alkohole vom Typ Erythrit, Pentaerythrit, Pentit und/oder Hexit sind, die bis zu 30 Masse% in den duroplastischen Kunststoffen enthalten sein können.

Bevorzugt enthalten die duroplastischen Kunststoffe 5 bis 50 Masse% polymermodifizierte anorganische Partikel, bezogen auf die duroplastischen Kunststoffe.

Beispiele für duroplastische Kunststoffe sind Melaminharze, Harnstoffharze, Guanaminharze, Cyanamidharze, Dicyandiamidharze, Sulfonamidharze oder Anilinharze.

Die duroplastischen Kunststoffe können aus Aminoplasten der gleichen Zusammensetzung bestehen, die interlamellar in den polymermodifizierten anorganischen Partikel enthalten sein können.

Die in den duroplastischen Kunststoffen enthaltend polymermodifizierte anorganische Partikel mit Schichtstruktur gegebenenfalls enthaltenen weiteren Zusatzstoffe können Zusatzstoffe sein, die ebenfalls in den Polyolefinen enthaltend polymermodifizierte anorganische Partikel mit Schichtstruktur sowie gegebenenfalls weitere Zusatzstoffe enthalten sein können.

Die erfindungsgemässen duroplastischen Kunststoffe enthaltend polymermodifizierte anorganische Partikel mit Schichtstruktur sowie gegebenenfalls weitere Zusatzstoffe werden nach einem Verfahren hergestellt, bei dem Mischungen aus Duroplast-Vor-kondensaten, polymermodifizierten anorganischen Partikeln mit Schichtstruktur und gegebenenfalls als weitere Zusatzstoffe anorganischen bzw. organischen Salzen, Füllstoffen, Verstärkerstoffen, polymeren Dispergatoren in Form von Lösungen, Dispersionen oder Emulsionen, Hilfsstoffen und/oder mehrwertigen Alkoholen nach üblichen Verfahren zu Halbzeugen oder Formstoffen ausgeformt und gehärtet werden, wobei der Gehalt der Blends an polymermodifizierten anorganischen Partikeln mit Schichtstruktur sowie gegebenenfalls als weitere Zusatzstoffe anorganischen bzw. organischen Salzen, Füllstoffen, Verstärkerstoffen, polymeren Dispergatoren, Hilfsstoffen und/oder mehrwertigen Alkoholen 1 bis 80 Masse%, bezogen auf die eingesetzten duroplastischen Kunststoffe, beträgt,
wobei die anorganischen bzw. organischen Salze Salze mit Ammonium-, Alkylammonium-, Phosphonium-, Alkylphosphonium-, Arylphosphonium-, Alkali- und/oder Erdalkali-Kationen und/oder Salze mit Phosphit-, Phosphat-, Poly-phosphate, Phosphonat-, Silikat- und/oder Borat-Anionen sind, die bis zu 45 Masse% im duroplastischen Kunststoff enthalten sein können,
wobei die Füllstoffe und/oder Verstärkerstoffe anorganische bzw. organische Füllstoffe und/ oder Fasern sind, die bis zu 60 Masse% im duroplastischen Kunststoff enthalten sein können,
wobei die polymeren Dispergatoren wasserlösliche, in Wasser dispergierbare und/oder in Wasser emulgierbare Polymere sind, die bis zu 5 Masse% im duroplastischen Kunststoff enthalten sein können,
und wobei die mehrwertigen Alkohole mehrwertige Alkohole vom Typ Erythrit, Pentaerythrit, Pentit und/oder Hexit sind, die bis zu 15 Masse% im duroplasti-schen Kunststoff enthalten sein können.

Eine bevorzugte Variante zur Herstellung der erfindungsgemässen duroplastischen Kunststoffe enthaltend modifizierte anorganische Partikel mit Schichtstruktur sowie gegebenenfalls weitere Zusatzstoffe besteht darin, dass die Duroplast-Vorkonden-sate durch Polykondensation der den Duroplast-Vorkondensaten zugrundeliegenden Monomeren in Gegenwart der polymermodifizierten anorganischen Partikel mit Schichtstruktur und gegebenenfalls als weitere Zusatzstoffe anorganischen bzw. organischen Salzen, Füllstoffen, Verstärkerstoffen, Hilfsstoffen polymeren Dispergatoren und/oder mehrwertigen Alkoholen hergestellt werden.

Die in den erfindungsgemässen duroplastischen Kunststoffen enthaltend polymermodifizierte anorganische Partikel mit Schichtstruktur sowie gegebenenfalls weitere Zusatzstoffe gegebenenfalls enthaltenen wasserlöslichen, in Wasser dispergierbaren und/oder in Wasser emulgierbaren Polymere als polymere Dispergatoren können bei der Herstellung der duroplastischen Kunststoffe ebenfalls in situ gebildet werden, indem zu den als wässrige Dispersionen bzw. Emulsionen vorliegenden Mischungen aus Aminoplast-Vorkondensaten und polymermodifizierten anorganischen Partikeln mit Schichtstruktur vor der Herstellung der duroplastischen Kunststoffe anstelle von polymeren Dispergatoren Mischungen aus ethylenisch ungesättigten Monomeren und thermisch zerfallenden Radikalbildnem zugesetzt werden, aus denen die wasserlöslichen, in Wasser dispergierbaren und/oder in Wasser emulgierbaren Polymere gebildet werden. Beispiele für geeignete ethylenisch ungesättigte Monomere sind Acrylamid, Vinylpyrrolidon, C₄-C₁₈₋(Meth)acrylsäureester und/oder Vinylacetat.

Bevorzugte Halbzeuge und Formstoffe aus Polyolefinen bzw. duroplastischen Kunst-stoffe enthaltend polymermodifizierte anorganische Partikel mit Schichtstruktur sowie gegebenenfalls weitere Zusatzstoffe sind Folien, Prepregs, Fasern, Platten, Rohre, Beschichtungen, Hohlkörper, Spritzgusserzeugnisse und Schaumstoffe.

Die erfindungsgemässen Halbzeuge und Formstoffe aus Polyolefinen enthaltend polymermodifizierte anorganische Partikel mit Schichtstruktur sowie gegebenenfalls weitere Zusatzstoffe können nach üblichen thermoplastischen Verarbeitungsverfahren hergestellt werden, wobei Poly-C₂-C₅-α-Olefine bzw. Copolymere aus C₂-C₅-α-Olefinen und α-Olefinen mit 2 bis 18 C-Atomen enthaltend polymermodifizierte anorganische Partikel mit Schichtstruktur und gegebenenfalls als weitere Zusatzstoffe anorganische bzw. organische Salze, Füllstoffe, Verstärkerstoffe, polymere Disperga-toren, Hilfsstoffe und/oder mehrwertige Alkohole in kontinuierlichen Knetern, bevorzugt in Extrudem mit L/D von 30 bis 48, bei Temperaturen von 30 bis 120°C oberhalb der Schmelz- bzw. Erweichungstemperaturen der Polyolefine aufgeschmolzen, homogenisiert, und
A) über eine Ringdüse ausgetragen, unter Einpressen von Luft als Blasfolie abgezogen und aufgewickelt werden, oder
B) über eine Breitschlitzdüse ausgetragen, auf eine Chill-Roll-Anlage aufgebracht und als Deckelfolie abgezogen und aufgewickelt werden oder bei Chill-Roll-Anlagen mit mehreren Breitschlitzdüsen als Coextrusionsfolie abgezogen und aufgewickelt werden, oder
C) als Schmelze auf ein Mischwalzwerk und nachfolgend auf einen Kalander aufgegeben werden und als Tiefziehfolie abgezogen und aufgewickelt werden oder auf Flächenbahnen aus Metallfolien, Kunststoffolien, Papierbahnen oder Textilbahnen aufgesiegelt und als Mehrkomponentenverbunde abgezogen und aufgewickelt werden, oder
D) als Schmelze auf einen Glättwerk aufgegeben und als Tiefziehfolie abgezogen und aufgewickelt, als Platte über Transportbänder abgezogen und geschnitten oder auf Flächenbahnen aus Metallfolien, Kunststoffolien, Papierbahnen oder Textilbahnen aufgesiegelt und als Mehrkomponentenverbunde abgezogen und aufgewickelt werden, oder
E) über eine Profildüse ausgetragen und als Profil abgezogen, geschnitten und konfektioniert werden, oder
F) über eine Ringdüse ausgetragen, unter Einpressen von Luft als Schlauch abgezogen und aufgewickelt oder als Rohr abgezogen, geschnitten und konfektioniert werden, oder
G) nach Eindosierung von Treibmitteln über eine Breitschlitzdüse ausgetragen oder unter Einpressen von Luft über eine Ringdüse ausgetragen und als Schaumfolie abgezogen und aufgewickelt oder über eine Runddüse ausgetragen, als Strang abgezogen und in Partikelschaumsegmente geschnitten werden, oder
H) über eine Breitschlitzdüse einer Rohrbeschichtungsanlage ausgetragen und schmelzflüssig auf das rotierende Rohr aufgesiegelt werden, oder
I) über eine Ringdüse unter vorheriger Einführung der Leiteradern oder der verkabelten Einzelkabel ausgetragen und als Einzelkabel oder als mit einem Kabelmantel versehenen verkabelten Einzelkabeln abgezogen und aufgewickelt werden, oder
K) durch Ringdüsen als schlauchförmiger Vorformling extrudiert, durch Ausblasen in einem temperierten geteilten Blaswerkzeug zum Hohlkörper umgeformt und gegebenenfalls in einem zweiten Blaswerkzeug einer zusätzlichen Längsverstreckung durch einen Streckstempel und einer weiteren radialen Verstreckung durch Blasluft unterzogen werden, oder
L) in ein temperiertes Spritzgiesswerkzeug zur Herstellung des Vorformlings eingespritzt und nach Entnahme, gegebenenfalls bevorzugt separater Temperierung des Vorformlings in einem Konditionierungswerkzeug in das Blaswerkzeug über-führt und durch Ausblasen zum Hohlkörper umgeformt werden, oder
M) in Spritzgussmaschinen, bevorzugt mit Dreizonenschnecken einer Schnecken-länge von 18 bis 24 D, hohen Einspritzgeschwindigkeiten und bei Werkzeug-temperaturen von 5 bis 70°C, zu Spritzgussformteilen verarbeitet werden, oder
N) in Schmelzspinnanlagen aus Plastifizierextruder, Schmelzepumpe, Schmelzeverteiler, Kapillarwerkzeug, Blasschacht und Nachfolgeeinrichtungen aufgeschmolzen und mittels Schmelzepumpe durch das Kapillarwerkzeug in den Blasschacht extrudiert und als Fäden abgezogen und in Nachfolgeeinrichtungen weiterverarbeitet werden.

Geeignete Verfahren zur Herstellung von Halbzeugen und Formstoffen aus Mischungen von Duroplast-Vorkondensaten, polymermodifizierten anorganischen Partikeln mit Schichtstruktur und gegebenenfalls weiteren Zusatzstoffen zu Halbzeugen und Formstoffen sind
- Rezepturierung zu Formmassen und thermischen Verarbeitung zu Pressteilen, Spritzgussteilen, Fäden oder Profilen durch Pressen, Spritzguss, Schmelzspinnen oder Extrusion, oder
- Verarbeitung von Lösungen der Duroplast-Vorkondensate, die die polymermodifizierten anorganischen Partikel mit Schichtstruktur dispergiert enthalten, zu Duroplastfasern durch Zentrifugenspinnen, Fadenziehen, Extrudieren oder Fibrillierungsprozesse, gegebenenfalls unter nachfolgender Reckung, und Härtung, oder
- Verarbeitung von Lösungen der Duroplast-Vorkondensate, die die polymermodifizierten anorganischen Partikel mit Schichtstruktur dispergiert enthalten, zu Mikrokapseln durch Eintrag in eine emulgatorfreie wässrige Dispersion von festen oder flüssigen Kapselkernbildnern, Aushärtung und Sprühtrocknung, oder
- Verarbeitung von Lösungen der Duroplast-Vorkondensate, die die polymermodifizierten anorganischen Partikel mit Schichtstruktur dispergiert enthalten, zu geschlossenzelligen Schaumstoffen durch Eintrag in eine emulgatorfreie wässrige Dispersion von flüchtigen Kohlenwasserstoffen, Inertgasen und/oder anorganischen Carbonaten, und Austrag der Hohlpartikel entweder in Formen und Aushärtung zu geschlossenzelligen Schaumstoffen oder durch ein Formwerkzeug und Aushärtung zu geschlossenzelligen geschäumten Profilen, oder
- Verarbeitung von Lösungen der Duroplast-Vorkondensate, die die polymermodifizierten anorganischen Partikel mit Schichtstruktur dispergiert enthalten, zu offenzelligen Schaumstoffen durch Eintrag in eine wässrige Treibmittelemulsion von flüchtigen Kohlenwasserstoffen, Inertgasen und/oder anorganischen Carbonaten, Erwärmung auf die Siede- bzw. Zersetzungstemperatur des Treibmittels und Austrag entweder in Formen und Aushärtung zu offenzelligen Schaumstoffen oder durch ein Formwerkzeug und Aushärtung zu offenzelligen geschäumten Profilen, oder
- Herstellung von Lackbeschichtungen durch Rezepturierung von Lösungen der Duroplast-Vorkondensate, die die polymermodifizierten anorganischen Partikel mit Schichtstruktur dispergiert enthalten, zu Lackharzlösungen bzw. Lackharzdispersionen und nachfolgend Auftrag der Lackharzlösungen bzw. Lackharzdisper-sionen auf flächige Trägermaterialien, Trocknung und Härtung, oder
- Herstellung von Schichtpressstoffen bzw. Laminaten durch Rezepturierung von Lösungen der Duroplast-Vorkondensate, die die polymermodifizierten anorganischen Partikel mit Schichtstruktur dispergiert enthalten, zu Tränkharzlösungen bzw. Tränkharzdispersionen und nachfolgend Tränkung von flächigen Trägermaterialien, Laminierung und Härtung, oder
- Verarbeitung von Duroplast-Vorkondensaten, die die polymermodifizierten anorganischen Partikel mit Schichtstruktur dispergiert enthalten, nach der Giessharztechnologie zu Halbzeugen, Formstoffen oder Beschichtungen.

### Beispiel 1

In einem 20 l - Rührreaktor mit Bodenablassventil werden 5,52 kg 30% Formaldehyd, 2,21 l Wasser und 300 g Montmorillonit mittels NaOH auf einen pH-Wert von pH=9,0 eingestellt. Nach Erwärmung der Mischung auf 75°C werden 4,27 kg Melamin zudosiert. Die Reaktortemperatur wird auf 90°C erhöht und nach Auflösung des Melamins wird ein pH-Wert von pH=9,4 eingestellt. Wenn bei der Kondensation eine Wasserverträglichkeit Wasser/ Melaminharz von 1,2 erreicht ist, wird abgekühlt und die Suspension sprühgetrocknet.

Die Primärteilchen des polymermodifizierten Montmorillonits besitzen einen durch Transmissionselektronenmikroskopie ermittelten mittleren Teilchendurchmesser von 180 nm. Der durch Elementaranalyse und Glühverlust ermittelte Gehalt der polymermodifizierten anorganischen Partikel an Melaminharz beträgt 94 Masse%.

### Beispiel 2

In einem 20 l - Rührreaktor mit Bodenablassventil werden 4,1 kg 30% Formaldehyd, 0,88 kg Glyoxal, 3,4 l Wasser und 350 g Kaolinit mittels NaOH auf einen pH-Wert von pH=9,1 eingestellt. Nach Erwärmung der Mischung auf 80°C werden 1,5 kg Harnstoff, 0,28 kg Thiohamstoff und 0,24 kg Guanidin (in Form von Guanidincarbonat) zudosiert. Die Reaktortemperatur wird auf 95°C erhöht und nach Auflösung der mehrfunktionellen Aminoverbindungen wird ein pH-Wert von pH=9,4 eingestellt. Wenn bei der Kondensation eine Wasserverträglichkeit Wasser/ Aminoplast von 1,4 erreicht ist, wird abgekühlt und die Suspension sprühgetrocknet.

Die Primärteilchen des polymermodifizierten Montmorillonits besitzen einen durch Transmissionselektronenmikroskopie ermittelten mittleren Teilchendurchmesser von 270 nm. Der durch Elementaranalyse und Glühverlust ermittelte Gehalt der polymermodifizierten anorganischen Partikel an Aminoplast beträgt 87 Masse%.

### Beispiel 3

In einen Leistritz-Extruder ZSK 27, UD=44 mit Seitenstromdosierung für pulverförmige Medien und einer Dekompressionszone für Vacuumentgasung, Temperaturprofil 20/200/200/200/200/200/200/200/200/200°C, wird eine Mischung eines Propylen-Copolymers (Schmelzindex 16,0 g/10 min bei 230°C/2,16 kg, Ethylengehalt 4,8 Masse%) mit 20 Masse% Ammoniumpolyphosphat, 5 Masse% Pentaerythrit 0,15 Masse% 2-tert.Butyl-4,6-diisopropylphenol, 0,10 Masse% Bis-2,2,6,6-tetramethyl-4-piperidylsebazat, und 0,3 Masse%, jeweils bezogen auf das Propylen-Copolymer, an Calciumstearat mit 14,25 kg/h dosiert, aufgeschmolzen und homogenisiert. Nachfolgend wird in die Polyolefinschmelze über eine Dosiereinrichtung für pulverförmige Medien in die Zone 4 mit 0,75 kg/h das polymermodifizierte Montmorillonit nach Beispiel 1 dosiert. Nach intensiver Homogenisierung wird die Mischung in der Dekompressionszone entgast, ausgetragen und granuliert.

Daraus hergestellte Prüfkörper besitzen eine Kerbschlagzähigkeit von 9,5 kJ/m² , einen Elastizitätsmodul von 2150 MPa und eine Rockwellhärte (C-Skala) von 72. Die Prüfung der Flammwidrigkeit nach UL 94 (1,6 mm) ergibt die Einordnung in die Klasse V-0.

## Patentansprüche

1. Polymermodifizierte anorganische Partikel mit Schichtstruktur,
herstellbar durch
a) Quellung von anorganischen Partikeln mit C₁-C₁₀-Aldehyden als Lösungen in Wasser bzw. Mischungen aus Wasser und C₁-C₈-Alkoholen, und
b) nachfolgender Umsetzung der Aldehyd - gequollenen anorganischen Partikel mit Lösungen oder Suspensionen von mehrfunktionellen C₁-C₃₀₋Aminoverbindungen vom Typ Melamin, Melaminderivate, Harnstoff, Harnstoffderivate, Guanidin, Guandinderivate, Cyanamid, Dicyanamid, Sulfonamide, und / oder Anilin sowie deren Salze in Wasser bzw. Mischungen aus Wasser und C₁-C₈-Alkoholen,
wobei die polymermodifizierten anorganischen Partikel einen mittleren Partikeldurchmesser von 5 nm bis 20000 nm und interlamellar 20 bis 5000 Masse % bezogen auf das wasserfreie anorganische Partikel, eines Gemischs aus 50 bis 98 Masse% von im wesentlichen Aminoplasten und 2 bis 50 Masse % Wasser enthalten.

2. Polymermodifizierte anorganische Partikel nach Anspruch 1, **dadurch gekennzeichnet, dass** die anorganischen Partikel mit Schichtstruktur Silikate, Phosphate, Arsenate, Titanate, Vanadate, Niobate, Molybdate und/oder Manganate, bevorzugt Schichtsilikate vom Typ Montmorillonit, Bentonit, Kaolinit, Muskovit, Hectorit, Fluorhectorit, Kanemit, Revdit, Grumantit, Ilerit, Saponit, Beidelit, Nontronit, Stevensit, Laponit, Taneolit, Vermiculit, Volkonskoit, Magadit, Rectorit, Halloysit, Kenyait, Sauconit, Borfluorphlogopite und/oder synthetische Smectite sind, und wobei die Schichtsilikate weiterhin bevorzugt Schichtsilikate mit austauschbaren Kationen vom Typ Alkali-, Erdalkali-, Aluminium-, Eisen- und/oder Mangan-Kationen sind.

3. Polymermodifizierte anorganische Partikel nach Anspruch 1, **dadurch gekennzeichnet, dass** die Aminoplaste Melaminharze, Harnstoffharze, Cyanamidharze, Dicyandiamidharze, Guanaminharze, Sulfonamidharze und/oder Anilinharze sind.

4. Polymermodifizierte anorganische Partikel nach Anspruch 3, **dadurch gekennzeichnet, dass** die Melaminharze Polykondensate aus Melamin bzw. Melaminderivaten und C₁₋C₁₀-Aldehyden mit einem Molverhältnis Melamin bzw. Melaminderivat / C₁-C₁₀₋Aldehyden 1 : 1 bis 1: 6 sowie deren partielle Veretherungsprodukte mit C₁-C₁₀₋Alkoholen sind, wobei die Melaminderivate bevorzugt durch Hydroxy-C₁-C₁₀-alkylgruppen , Hydroxy-C₁-C₄-alkyl(oxa-C₂-C₄-alkyl)₁₋₅-gruppen und/oder durch Amino-C₁₋C₁₂-alkylgruppen substituierte Melamine, Diaminomethyltriazine und/oder Diaminophenyltriazine, besonders bevorzugt 2-(2-Hydroxyethylamino)-4,6-diamino-1,3,5-triazin, 2-(5-Hydroxy-3-oxa-pentylamino)-4,6-diamino-1,3,5-triazin und/oder 2,4,6-Tris-(6-amino-hexylamino)-1,3,5-triazin, Ammelin, Ammelid, Melem, Melon, Melam, Benzoguanamin, Acetoguanamin, Tetramethoxymethylbenzoguanamin, Caprinoguanamin und/oder Butyroguanamin sind, und die C₁-C₁₀-Aldehyde bevorzugt Formaldehyd, Acetaldehyd, Trimethylolacetaldehyd, Acrolein, Furfurol, Glyoxal und/oder Glutaraldehyd, besonders bevorzugt Formaldehyd, sind.

5. Polymermodifizierte anorganische Partikel nach Anspruch 1, **dadurch gekennzeichnet, dass** die C₁-C₁₀-Aldehyde Formaldehyd, Acetaldehyd, Trimethylolacetaldehyd, Acrolein, Benzaldehyd, Furfurol, Glyoxal, Glutaraldehyd, Phthalaldehyd und/oder Terephthalaldehyd, bevorzugt Formaldehyd, sind.

6. Polymermodifizierte anorganischer Partikel nach Anspruch 1, **dadurch gekennzeichnet, dass** die Melaminderivate durch Hydroxy-C₁-C₁₀-alkylgruppen, Hydroxy-C₁-C₄₋alkyl-(oxa-C₂-C₄-alkyl)₁₋₅-gruppen und/oder durch Amino-C₁-C₁₂-alkylgrup-pen substituierte Melamine, Diaminomethyltriazine und/oder Diaminophenyltriazine, bevorzugt 2-(2-Hydroxyethyl-amino)-4,6-diamino-1,3,5-triazin, 2-(5-Hydroxy-3-oxapentylamino)-4,6-diamino-1,3,5-triazin, 2,4,6-Tris-(6-aminohexylamino)-1,3,5-triazin und/oder 2,4-(Di-5-hydroxy-3-oxa-pentylamin)-6-methyl-1,3,5-triazin, Ammelin, Ammelid, Melem, Melon und/oder Melam sind.

7. Polymermodifizierte anorganische Partikel nach Anspruch 1, **dadurch gekennzeichnet, dass** die Harnstoffderivate Thiohamstoff sowie durch C₁-C₁₀-alkyl-gruppen, C₆₋C₁₄-arylgruppen, Hydroxy-C₁-C₁₀-alkylgruppen, Hydroxy-C₁-C₄-alkyl-(oxa-C₂-C₄-alkyl)₁₋₅-gruppen und/oder durch Amino-C₁-C₁₂-alkylgruppen substituierter Harnstoff bzw. Thioharnstoff sind.

8. Polymermodifizierte anorganische Partikel nach Anspruch 1, **dadurch gekennzeichnet, dass** die Salze von Melamin, Melaminderivaten, Harnstoff, Harnstoffderivaten, Guanidin, Guanidinderivaten, Cyanamid, Dicyandiamid, Sulfonamiden und/oder Anilin Salze mit anorganischen und/oder organischen Anionen, bevorzugt Fluoride, Chloride, Bromide, Jodide, Sulfate, Phosphate, Borate, Silikate, Cyanurate, Tosylate, Formiate, Acetate, Propionate, Butyrate und/oder Maleinate, *sind.*

9. Verfahren zur Herstellung polymermodifizierter anorganischer Partikel mit Schichtstruktur, **dadurch gekennzeichnet, dass** polymermodifizierte anorganische Partikel mit einem mittleren Partikeldurchmesser von 5 nm bis 20000 nm und einem interlamellaren Gehalt von 20 bis 5000 Masse%, bezogen auf das wasserfreie anorganische Partikel, eines Gemischs aus 50 bis 98 Masse% von im wesentlichen Aminoplasten und 2 bis 50 Masse% Wasser nach einem Mehrstufenverfahren hergestellt werden, bei dem in der 1. Verfahrensstufe anorganische Partikel mit Schichtstruktur in einem Rührreaktor bei 20 bis 100°C und einer Verweilzeit von 10 bis 180 min durch Quellung mit 15 bis 4000 Masse%, bezogen auf die wasserfreien anorganischen Partikel , C₁-C₁₀₋Aldehyden als 5 bis 60% Lösungen in Wasser bzw. Mischungen aus 5 bis 99 Gew.% Wasser und 95 bis 1 Masse% C₁-C₈-Alkoholen, die gegebenenfalls 0,05 bis 1,0 Masse%, bezogen auf die C₁-C₁₀-Aldehyde, saure Katalysatoren enthalten, bei pH > 8,5 beladen werden, und in einer 2. Verfahrensstufe die mit C₁-C₁₀-Aldehyden gequollenen anorganischen Partikel mit Lösungen oder Suspensionen von mehrfunktionellen C₁-C₃₀ Aminoverbindungen vom Typ Melamin, Melaminderivate, Harnstoff, Harnstoffderivate, Guanidin, Guanidinderivate, Cyanamid, Dicyandiamid, Sulfonamide und/oder Anilin sowie deren Salze in Wasser bzw. Mischungen aus 5 bis 99 Gew.% Wasser und 95 bis 1 Masse% C₁-C₈-Alkoholen mit einem Feststoffgehalt von 5 bis 90 Masse% homogenisiert und bei Verweilzeiten von 20 bis 150 min bei 50 bis 95°C umgesetzt werden, wobei das Molverhältnis der zugesetzten mehrfunktionellen C₁-C₃₀ Aminoverbindungen / C₁-C₁₀-Aldehyden 1 : 2 bis 1 : 6 beträgt, und nachfolgend die polymermodifizierten anorganischen Partikel unter Abtrennung der flüssigen Phase bei 20 bis 180°C und einer Verweilzeit von 0,1 bis 8 Std. getrocknet werden.

10. Verwendung polymermodifizierter anorganischer Partikel nach Anspruch 1 als Additiv zur Flammfestmachung von Kunststoffen, bevorzugt in Kombination mit anorganischen und/oder organischen Salzen mit Ammonium-, Alkylammonium-, Arylammonium, Phosphonium-, Alkylphosphonium-, Arylphosphonium- Alkali- und/oder Erdalkali-Kationen und/oder Phosphat-, Phosphit-, Phosphonat-, Silikat- und/oder Borat-Anionen und/oder mit mehrwertigen Alkoholen vom Typ Erythrit, Pentaerythrit, Pentit und/oder Hexit, sowie als Additiv zur Erhöhung der Kratzfestigkeit, UV-Beständigkeit und Verbesserung der Barriereeigenschaften von Kunststoffen und Kunststofflaminaten, sowie als Formmassen und als Katalysator bzw. Katalysatorträger.

11. Polyolefine, enthaltend modifizierte anorganische Partikel mit Schichtstruktur nach Anspruch 1.

12. Polyolefine, enthaltend 1 bis 60 Masse%, bezogen auf die eingesetzten Polyolefine, polymermodifizierte anorganische Partikel mit Schichtstruktur nach Anspruch 1 sowie gegebenenfalls als weitere Zusatzstoffe anorganische bzw. organischen Salze, Füllstoffe, Verstärkerstoffe, polymere Dispergatoren, Hilfsstoffe und/oder mehrwertige Alkohole, wobei die anorganischen bzw. organischen Salze Salze mit Ammonium-, Alkylammonium-, Phosphonium-, Alkylphosphonium-, Arylphosphonium-, Alkali- und/oder Erdalkali-Kationen und/oder Salze mit Phosphit-, Phosphat-, Phosphonat-, Silikat- und/oder Borat-Anionen sind, die bis zu 25 Masse% im Polyolefin enthalten sein können,
wobei die Füllstoffe und/oder Verstärkerstoffe anorganische bzw. organische Füllstoffe und/oder Fasern sind, die bis zu 40 Masse% im Polyolefin enthalten sein können,
wobei die polymeren Dispergatoren wasserlösliche, in Wasser dispergierbare und/oder in Wasser emulgierbare Polymere sind, die bis zu 3 Masse% im Poly- olefin enthalten sein können,
und wobei die mehrwertigen Alkohole mehrwertige Alkohole vom Typ Erythrit, Pentaerythrit, Pentit und/oder Hexit sind, die bis zu 15 Masse% im Polyolefin enthalten sein können.

13. Duroplastische Kunststoffe, enthaltend 2 bis 80 Masse%, bezogen auf die eingesetzten duroplastischen Kunststoffe, polymermodifizierte anorganische Partikel mit Schichtstruktur nach Anspruch 1 sowie gegebenenfalls als weitere Zusatz-stoffe anorganische bzw. organischen Salze, Füllstoffe, Verstärkerstoffe, poly-mere Dispergatoren, Hilfsstoffe und/oder mehrwertige Alkohole, wobei die anorganischen bzw. organischen Salze Salze mit Ammonium-, Alkylammonium-, Phosphonium-, Alkylphosphonium-, Arylphosphonium-, Alkali- und/oder Erdalkali-Kationen und/oder Salze mit Phosphit-, Phosphat-, Phosphonat-, Silikat- und/oder Borat-Anionen sind, die bis zu 60 Masse% in den duroplastischen Kunststoffen enthalten sein können,
wobei die Füllstoffe und/oder Verstärkerstoffe anorganische bzw. organische Füllstoffe und/oder Fasern sind, die bis zu 70 Masse% in den duroplastischen Kunststoffen enthalten sein können,
wobei die polymeren Dispergatoren wasserlösliche, in Wasser dispergierbare und/oder in Wasser emulgierbare Polymere sind, die bis zu 5 Masse% in den duroplastischen Kunststoffen enthalten sein können,
und wobei die mehrwertigen Alkohole mehrwertige Alkohole vom Typ Erythrit, Pentaerythrit, Pentit und/oder Hexit sind, die bis zu 30 Masse% in den duroplastischen Kunststoffen enthalten sein können.

14. Halbzeuge und Formstoffe in Form von Folien, Prepregs, Fasern, Platten, Rohren, Beschichtungen, Hohlkörpern, Spritzgusserzeugnissen und Schaumstoffen aus Polyolefinen bzw. duroplastischen Kunststoffen enthaltend polymermodifizierte anorganische Partikel mit Schichtstruktur sowie gegebenenfalls weitere Zusatzstoffe nach Anspruch 12 oder 13.

## Claims

1. Polymer-modified inorganic particle having a layer structure,
preparable by
a) swelling inorganic particles with C₁-C₁₀ aldehydes as solutions in water or mixtures of water and C₁-C₈-alcohols, and
b) a subsequent reaction of the aldehyde-swollen inorganic particles with solutions or suspensions of polyfunctional C₁-C₃₀ amino compounds of the type consisting of melamine, melamine derivatives, urea, urea derivatives, guanidine, guanidine derivatives, cyanamide, dicyandiamide, sulfonamide and/or aniline and salts thereof in water or mixtures of water and C₁-C₈ alcohols,
the polymer-modified inorganic particles having a mean particle diameter of from 5 nm to 20 000 nm and an interlamellar content of from 20 to 5 000% by mass, based on the anhydrous inorganic particle, of a mixture of from 50 to 98% by mass of substantially aminoplasts and from 2 to 50% by mass of water.

2. Polymer-modified inorganic particles according to Claim 1, **characterized in that** the inorganic particles having a layer structure are silicate, phosphate, arsenate, titanate, vanadate, niobate, molybdate and/or manganate, preferably a sheet silicate of the type consisting of montmorillonite, bentonite, kaolinite, muscovite, hectorite, fluorohectorite, kanemite, revdite, grumantite, ilerite, saponite, beidelite, nontronite, stevensite, laponite, taneolite, vermiculite, volkonskoite, magadite, rectorite, halloysite, kenyaite, sauconite or borofluorophlogopite, and/or a synthetic smectite, the sheet silicate furthermore preferably being a sheet silicate having exchange cations of the type consisting of alkali metal, alkaline earth metal, aluminum, iron and/or manganese cations.

3. Polymer-modified inorganic particles according to Claim 1, **characterized in that** the aminoplasts are melamine resins, urea resins, cyanamide resins, dicyandiamide resins, guanamine resins, sulfonamide resins and/or aniline resins.

4. Polymer-modified inorganic particles according to Claim 3, **characterized in that** the melamine resins are polycondensates of melamine or melamine derivatives and C₁-C₁₀-aldehydes with a molar melamine or melamine derivative/C₁-C₁₀-aldehyde ratio of from 1:1 to 1:6 and the partial etherification products thereof with C₁-C₁₀₋alcohols, the melamine derivatives preferably being melamines, diaminomethyltriazines and/or diaminophenyltriazines substituted by hydroxy-C₁₋C₁₀-alkyl groups, hydroxy-C₁-C₄-alkyl (oxa-C₂-C₄₋alkyl)₁₋₅ groups and/or by amino-C₁-C₁₂-alkyl groups, particularly preferably 2-(2-hydroxyethylamino)-4,6-diamino-1,3,5-triazine, 2-(5-hydroxy-3-oxapentylamino)-4,6-diamino-1,3,5-triazine and/or 2,4,6-tris(6-aminohexylamino)-1,3,5-triazine, ammeline, ammelide, melem, melon, melam, benzoguanamine, acetoguanamine, tetramethoxymethylbenzoguanamine, caprinoguanamine and/or butyroguanamine, and the C₁-C₁₀-aldehydes are preferably formaldehyde, acetaldehyde, trimethylolacetaldehyde, acrolein, furfurol, glyoxal and/or glutaraldehyde, particularly preferably formaldehyde.

5. Polymer-modified inorganic particles according to Claim 1, **characterized in that** the C₁-C₁₀-aldehydes are formaldehyde, acetaldehyde, trimethylolacetaldehyde, acrolein, benzaldehyde, furfurol, glyoxal, glutaraldehyde, phthalaldehyde and/or terephthalaldehyde, preferably formaldehyde.

6. Polymer-modified inorganic particles according to Claim 1, **characterized in that** the melamine derivatives are melamines, diaminomethyltriazines and/or diaminophenyltriazines substituted by hydroxy-C₁-C₁₀-alkyl groups, hydroxy-C₁-C₄₋alkyl(oxa-C₂-C₄-alkyl)₁₋₅ groups and/or by amino-C₁₋C₁₂-alkyl groups, preferably 2- (2-hydroxyethylamino)-4,6-diamino-1,3,5-triazine, 2-(5-hydroxy-3-oxapentylamino)-4,6-diamino-1,3,5-triazine, 2,4,6-tris(6-aminohexylamino)-1,3,5-triazine and/or 2,4-(di-5-hydroxy-3-oxapentylamino)-6-methyl-1,3,5-triazine, ammeline, ammelide, melem, melon and/or melam.

7. Polymer-modified inorganic particles according to Claim 1, **characterized in that** the urea derivatives are thiourea, and urea or thiourea substituted by C₁-C₁₀-alkyl groups, C₆-C₁₄-aryl groups, hydroxy-C₁-C₁₀-alkyl groups, hydroxy-C₁-C₄₋alkyl(oxa-C₂-C₄-alkyl)₁₋₅ groups and/or by amino-C₁₋C₁₂-alkyl groups.

8. Polymer-modified inorganic particles according to Claim 1, **characterized in that** the salts of melamine, melamine derivatives, urea, urea derivatives, guanidine, guanidine derivatives, cyanamide, dicyandiamide, sulfonamides and/or aniline are salts with inorganic and/or organic anions, preferably fluorides, chlorides, bromides, iodides, sulfates, phosphates, borates, silicates, cyanurates, tosylates, formates, acetates, propionates, butyrates and/or maleates.

9. Process for the preparation of polymer-modified inorganic particles having a layer structure, **characterized in that** polymer-modified inorganic particles having a mean particle diameter of from 5 nm to 20 000 nm and an interlamellar content of 20 to 5 000% by mass, based on the anhydrous inorganic particles, of a mixture of from 50 to 98% by mass of substantially aminoplasts and from 2 to 50% by mass of water are prepared by a multistage process in which, in the 1st process step, inorganic particles having a layer structure are loaded, in a stirred reactor at from 20 to 100°C and in a residence time of from 10 to 180 min by swelling, with from 15 to 4 000% by mass, based on the anhydrous inorganic particles, of C₁-C₁₀₋aldehydes as from 5 to 60% solutions in water or mixtures of from 5 to 99% by weight of water and from 95 to 1% by mass of C₁-C₈-alcohols, which optionally contain from 0.05 to 1.0% by mass, based on the C₁-C₁₀-aldehydes, of acidic catalysts, at a pH > 8.5, and in a second process step the inorganic particles swollen with C₁-C₁₀₋aldehydes are homogenized with solutions or suspensions of polyfunctional C₁-C₃₀ amino compounds of the type consisting of melamine, melamine derivatives, urea, urea derivatives, guanidine, guanidine derivatives, cyanamide, dicyanmdiamide, sulfonamide and/or aniline and the salts thereof in water or mixtures of from 5 to 99% by weight of water and from 95 to 1% by mass of C₁₋C₈-alcohols, having a solids content of 5 to 90% by mass, and are reacted in residence times of from 20 to 150 min and from 50 to 95°C, the molar ratio of the added polyfunctional C₁-C₃₀-amino compounds to C₁₋C₁₀-aldehydes being from 1 : 2 to 1 :6 and the polymer-modified inorganic particles are subsequently dried with removal of the liquid phase at from 20 to 180°C and in a residence time of from 0.1 to 8 hours.

10. Use of polymer-modified inorganic particles according to Claim 1 as an additive for flameproofing plastics, preferably in combination with inorganic and/or organic salts having ammonium, alkylammonium, arylammonium, phosphonium, alkylphosphonium, arylphosphonium, alkali metal and/or alkaline earth metal cations and/or phosphate, phosphite, phosphonate, silicate and/or borate anions, and/or with polyhydric alcohols of the type consisting of erythritol, pentaerythritol, pentitol and/or hexitol, and as additives for increasing the scratch resistance and UV stability and improving the barrier properties of plastics and plastics laminates, and as molding materials and as a catalyst or catalyst support.

11. Polyolefins containing modified inorganic particles having a layer structure according to Claim 1.

12. Polyolefins comprising from 1 to 60% by mass, based on the polyolefins used, of polymer-modified inorganic particles having a layer structure according to Claim 1 and optionally, as further additives, inorganic or organic salts, fillers, reinforcing materials, polymeric dispersants, assistants and/or polyhydric alcohols, the inorganic or organic salts being salts having ammonium, alkylammonium, phosphonium, alkylphosphonium, arylphosphonium, alkali metal and/or alkaline earth metal cations and/or salts having phosphite, phosphate, phosphonate, silicate and/or borate anions, which may be contained in an amount of up to 25% by mass on the polyolefin,
the fillers and/or reinforcing materials being inorganic or organic fillers and/or fibers which may be contained in an amount of up to 40% by mass in the polyolefin,
the polymeric dispersants being water-soluble, water-dispersible and/or water-emulsifiable polymers, which may be present in an amount of up to 3% by mass in the polyolefin,
and the polyhydric alcohols being polyhydric alcohols of the type consisting of erythritol, pentaerythritol, pentitol and/or hexitol, which may be contained in an amount of up to 15% by mass in the polyolefin.

13. Thermosetting plastic comprising from 2 to 80% by mass, based on the thermosetting plastic used, of polymer-modified inorganic particles having a layer structure according to claim 1 and optionally, as further additives, inorganic or organic salts, fillers, reinforcing materials, polymeric dispersants, assistants and/or polyhydric alcohols,
the inorganic or organic salts being salts having ammonium, alkylammonium, phosphonium, alkylphosphonium, arylphosphonium, alkali metal and/or alkaline earth metal cations and/or salts having phosphite, phosphate, phosphonate, silicate and/or borate anions, which may be contained in an amount of up to 60% by mass in the thermosetting plastic, the fillers and/or reinforcing materials being inorganic or organic fillers and/or fibers which may be contained in an amount of up to 70% by mass in the thermosetting plastic,
the polymeric dispersants being water-soluble, water-dispersible and/or water-emulsifiable polymers which may be contained in an amount of up to 5% by mass in the thermosetting plastic
and the polyhydric alcohols being polyhydric alcohols of the type consisting of erythritol, pentaerythritol, pentitol and/or hexitol, which may be contained in an amount of up to 30% by mass in the thermosetting plastic.

14. Semifinished product or molding, in the form of films, prepregs, fibers, sheets, pipes, coatings, hollow bodies, injection molded products and foams, of a polyolefin or thermosetting plastic comprising polymer-modified inorganic particles having a layer structure and optionally further additives according to Claim 12 or 13.

## Revendications

1. Particules inorganiques à structure lamellaire, modifiées par des polymères,
pouvant être préparées par
a) gonflement de particules inorganiques avec des aldéhydes en C₁-C₁₀ sous forme de solutions dans l'eau ou des mélanges d'eau et d'alcools en C₁-C₈, et
b) réaction subséquente des particules inorganiques gonflées avec des aldéhydes, avec des solutions ou suspensions de composés aminés polyfonctionnels en C₁-C₃₀ de type mélamine, dérivés de mélamine, urée, dérivés d'urée, guanidine, dérivés de guanidine, cyanamide, dicyanamide, sulfonamide et/ou aniline ainsi que leurs sels, dans l'eau ou des mélanges d'eau et d'alcools en C₁-C₈,
les particules inorganiques modifiées par des polymères ayant un diamètre moyen de particule de 5 nm à 20 000 nm et ayant une teneur interlamellaire de 20 à 5 000 % en masse, par rapport à la particule inorganique anhydre, en un mélange de 50 à 98 % en masse de polymères essentiellement de type aminoplaste et de 2 à 50 % en masse d'eau.

2. Particules inorganiques modifiées par des polymères selon la revendication 1, **caractérisées en ce que** les particules inorganiques à structure lamellaire sont des silicates, des phosphates, des arséniates, des titanates, des vanadates, des niobates, des molybdates et/ou des manganates, de préférence des silicates lamellaires du type montmorillonite, bentonite, kaolinite, muscovite, hectorite, fluorohectorite, kanémite, revdite, grumantite, ilérite, saponite, beidellite, nontronite, stévensite, laponite, tanéolite, vermiculite, volkonskoïte, magadite, rectorite, halloysite, kenyaïte, sauconite, borofluorophlogopite et/ou smectite synthétique, et les silicates lamellaires étant en outre de préférence des silicates lamellaires à cations échangeables du type cations alcalins, alcalino-terreux, aluminium, fer et/ou manganèse.

3. Particules inorganiques modifiées par des polymères selon la revendication 1, **caractérisées en ce que** les aminoplastes sont des résines mélamine, des résines urée, des résines cyanamide, des résines dicyanodiamide, des résines guanamine, des résines sulfonamide et/ou des résines aniline.

4. Particules inorganiques modifiées par des polymères selon la revendication 3, **caractérisées en ce que** les résines mélamine sont des produits de polycondensation de mélamine ou dérivés de mélamine et d'aldéhydes en C₁-C₁₀ ayant un rapport molaire mélamine ou dérivé de mélamine / aldéhydes en C₁-C₁₀ de 1:1 à 1:6, ainsi que leurs produits d'éthérification partielle par des alcools en C₁-C₁₀, les dérivés de mélamine étant de préférence des mélamines, des diaminométhyltriazines et/ou des diaminophényltriazines,substituées par des groupes hydroxyalkyle en C₁-C₁₀, des groupes hydroxyalkyl(C₁-C₄)[oxa-alkyle(C₂-C₄)]₁₋₅ et/ou par des groupes aminoalkyle(C₁-C₁₂), de façon particulièrement préférée la 2-(2-hydroxyéthylamino)-4,6-diamino-1,3,5-triazine, le 2-(5-hydroxy-3-oxapentylamino)-4,6-diamino-1,3,5-triazine et/ou la 2,4,6-tris(6-aminohexylamino)-1,3,5-triazine, l'amméline, l'ammélide, le melem, le melon, le melam, la benzoguanamine, l'acétoguanamine, la tétraméthoxyméthylbenzoguanamine, la caprinoguanamine et/ou la butyroguanamine, et les aldéhydes en C₁-C₁₀ sont de préférence le formaldéhyde, l'acétaldéhyde, le triméthylolacétaldéhyde, l'acroléine, le furfurol, le glyoxal et/ou le glutaraldéhyde, de façon particulièrement préférée le formaldéhyde.

5. Particules inorganiques modifiées par des polymères selon la revendication 1, **caractérisées en ce que** les aldéhydes en C₁-C₁₀ sont le formaldéhyde, l'acétaldéhyde, le triméthylolacétaldéhyde, l'acroléine, le furfurol, le glyoxal, le glutaraldéhyde, l'aldéhyde phtalique et/ou l'aldéhyde téréphtalique, de préférence le formaldéhyde.

6. Particules inorganiques modifiées par des polymères selon la revendication 1, **caractérisées en ce que** les dérivés de mélamine sont des mélamines, des diaminométhyltriazines et/ou des diaminophényltriazines, substituées par des groupes hydroxyalkyle en C₁-C₁₀, des groupes hydroxyalkyl(C₁-C₄)[oxa-alkyle(C₂-C₄)]₁₋₅ et/ou par des groupes aminoalkyle(C₁-C₁₂), de préférence la 2-(2-hydroxyéthylamino)-4,6-diamino-1,3,5-triazine, la 2-(5-hydroxy-3-oxapentylamino)-4,6-diamino-1,3,5-triazine, la 2,4,6-tris(6-aminohexylamino)-1,3,5-triazine et/ou la 2,4-(di-5-hydroxy-3-oxapentylamine)-6-méthyl-1,3,5-triazine, l'amméline, l'ammélide, le melem, le melon et/ou le melam.

7. Particules inorganiques modifiées par des polymères selon la revendication 1, **caractérisées en ce que** les dérivés d'urée sont la thio-urée ainsi qu'une urée ou thio-urée substituée par des groupes alkyle en C₁-C₁₀, des groupes aryle en C₆-C₁₄, des groupes hydroxyalkyle(C₁-C₁₀), des groupes hydroxyalkyl (C₁-C₄) - [oxa-alkyle (C₂-C₄)]₁₋₅ et/ou par des groupes aminoalkyle(C₁-C₁₂).

8. Particules inorganiques modifiées par des polymères selon la revendication 1, **caractérisées en ce que** les sels de mélamine, de dérivés de mélamine, d'urée, de dérivés d'urée, de guanidine, de dérivés de guanidine, de cyanamide, de dicyanodiamide, de sulfonamides et/ou d'aniline sont des sels avec des anions minéraux et/ou organiques, de préférence les fluorures, chlorures, bromures, iodures, sulfates, phosphates, borates, silicates, cyanurates, tosylates, formiates, acétates, propionates, butyrates et/ou maléates.

9. Procédé pour la préparation de particules inorganiques modifiées par des polymères, à structure lamellaire, **caractérisé en ce qu'**on prépare des particules inorganiques modifiées par des polymères, ayant un diamètre moyen de particule de 5 nm à 20 000 nm et ayant une teneur interlamellaire de 20 à 5 000 % en masse, par rapport à la particule inorganique anhydre, en un mélange de 50 à 98 % en masse de polymères essentiellement de type aminoplaste et de 2 à 50 % en masse d'eau, selon un procédé en plusieurs étapes, dans lequel, dans la première étape du procédé, on charge des particules inorganiques à structure lamellaire, dans un réacteur à agitation, à une température de 20 à 100 °C et pendant un temps de séjour de 10 à 180 minutes, par gonflement avec 15 à 4 000 % en masse, par rapport aux particules inorganiques anhydres, d'aldéhydes en C₁-C₁₀ sous forme de solutions à 5-60 % dans l'eau ou des mélanges de 5 à 99 % en poids d'eau et 95 à 1 % en masse d'alcools en C₁-C₈ qui contiennent éventuellement de 0,05 à 1,0 % en masse, par rapport aux aldéhydes en C₁-C₁₀, de catalyseurs acides, à pH > 8,5, et dans une deuxième étape du procédé, on homogénéise les particules inorganiques, gonflées avec des aldéhydes en C₁-C₁₀, avec des solutions ou suspensions de composés aminés polyfonctionnels en C₁-C₃₀ du type mélamine, dérivés de mélamine, urée, dérivés d'urée, guanidine, dérivés de guanidine, cyanamide, dicyanodiamide, sulfonamides et/ou aniline ainsi que de leurs sels, dans l'eau ou des mélanges de 5 à 99 % en poids d'eau et de 95 à 1 % en masse d'alcools en C₁-C₈, à une teneur en matières solides de 5 à 90 % en masse et on fait réagir le mélange pendant des temps de séjour de 20 à 150 minutes, à une température de 50 à 95 °C, le rapport molaire des composés aminés en C₁-C₃₀ polyfonctionnels ajoutés/aldéhydes en C₁-C₁₀ allant de 1:2 à 1:6, et les particules inorganiques modifiées par des polymères sont ensuite séchées par évaporation de la phase liquide à 20-180 °C et pendant un temps de séjour de 0,1 à 8 heures.

10. Utilisation de particules inorganiques modifiées par des polymères selon la revendication 1, comme additif pour l'ignifugation de matières plastiques, de préférence en association avec des sels organiques et/ou minéraux avec des cations ammonium, alkylammonium, arylammonium, phosphonium, alkylphosphonium, arylphosphonium, alcalins et/ou alcalino-terreux et/ou des anions phosphate, phosphite, phosphonate, silicate et/ou borate et/ou avec des alcools polyhydriques du type érythritol, pentaérythritol, pentitol et/ou hexitol, ainsi que comme additif pour augmenter la résistance aux rayures, la résistance aux UV et améliorer les propriétés barrière de matières plastiques et de stratifiés de matières plastiques, ainsi qu'en tant que matières à mouler et en tant que catalyseurs ou supports de catalyseurs.

11. Polyoléfines, contenant des particules inorganiques modifiées à structure lamellaire selon la revendication 1.

12. Polyoléfines, contenant de 1 à 60 % en masse, par rapport aux polyoléfines utilisées, de particules inorganiques modifiées par des polymères, à structure lamellaire, selon la revendication 1, ainsi qu'éventuellement en tant qu'autres additifs des sels organiques ou minéraux, des charges, des renforts, des dispersants polymères, des adjuvants et/ou des alcools polyhydriques, les sels organiques ou minéraux étant des sels avec des cations ammonium, alkylammonium, phosphonium, alkylphosphonium, arylphosphonium, alcalins et/ou alcalino-terreux et/ou des sels avec des anions phosphite, phosphate, phosphonate, silicate et/ou borate, qui peuvent être contenus à raison de jusqu'à 25 % en masse dans la polyoléfine,
les charges et/ou les renforts étant des charges et/ou des fibres organiques ou minérales qui peuvent être contenues à raison de jusqu'à 40 % en masse dans la polyoléfine,
les dispersants polymères étant des polymères hydrosolubles, dispersibles dans l'eau et/ou émulsifiables dans l'eau, qui peuvent être contenus à raison de jusqu'à 3 % en masse dans les polyoléfines,
et les alcools polyhydriques étant des alcools polyhydriques du type érythritol, pentaérythritol, pentitol et/ou hexitol, qui peuvent être contenus à raison de jusqu'à 15 % en masse dans la polyoléfine.

13. Matières plastiques thermodurcissables contenant de 2 à 80 % en masse, par rapport aux matières plastiques thermodurcissables utilisées, de particules inorganiques modifiées par des polymères, à structure lamellaire, selon la revendication 1 ainsi qu'éventuellement, comme autres additifs, des sels organiques ou minéraux, des charges, des renforts, des dispersants polymères, des adjuvants et/ou des alcools polyhydriques, les sels organiques ou minéraux étant des sels avec des cations ammonium, alkylammonium, phosphonium, alkylphosphonium, arylphosphonium, alcalins et/ou alcalino-terreux et/ou des sels avec des anions phosphite, phosphate, phosphonate, silicate et/ou borate, qui peuvent être contenus à raison de jusqu'à 60 % en masse dans les matières plastiques thermodurcissables,
les charges et/ou les renforts étant des charges et/ou des fibres organiques ou minérales qui peuvent être contenues à raison de jusqu'à 70 % en masse dans les matières plastiques thermodurcissables,
les dispersants polymères étant des polymères hydrosolubles, dispersibles dans l'eau et/ou émulsifiables dans l'eau, qui peuvent être contenus à raison de jusqu'à 5 % en masse dans les matières plastiques thermodurcissables,
et les alcools polyhydriques étant des alcools polyhydriques du type érythritol, pentaérythritol, pentitol et/ou hexitol, qui peuvent être contenus à raison de jusqu'à 30 % en masse dans les matières plastiques thermodurcissables.

14. Articles semi-finis et matières moulées sous forme de films, de préimprégnés, de fibres, de plaques, de tubes, de revêtements, de corps creux, de produits moulés par injection et de mousses à base de polyoléfines ou de matières plastiques thermodurcissables contenant des particules inorganiques modifiées par des polymères, à structure lamellaire, ainsi qu'éventuellement d'autres additifs selon la revendication 12 ou 13.
